# EUROPÄISCHE PATENTANMELDUNG

(11) **EP 1 411 273 A1**
(43) Veröffentlichungstag der Anmeldung: **21.04.2004**
(21) Anmeldenummer: 02022839.1
(22) Anmeldetag: 14.10.2002
(51) Int. Cl.: F16H 49/00, F16H 13/06

(54) **Wellgetriebe mit Planetenradantrieb**

(71) Anmelder: Oechsler Aktiengesellschaft, 91522 Ansbach (DE)
(72) Erfinder: Ruttor, Martin, 91522 Ansbach (DE); Poehlau, Frank, 90762 Fürth (DE)

(57) **Zusammenfassung**

Die Drehzahl der Antriebswelle (14) eines Wellgetriebes (10) mit Planetenradantrieb erfährt in der Verzahnung vom antriebsfesten Sonnenrad (31) zu den Planeten-Zahnrädern (33) eine konstruktiv fein abstufbare erste Untersetzung, die dann in der Verzahnung des Flexbandes (28) zu den Außenringen (18,27) eines für das eigentliche Wellgetriebe typische sehr große zusätzliche Untersetzung erfährt. Zwischen dem Planetengetriebe zur Eingangsuntersetzung und dem Getriebegehäuse (11) besteht kein Verzahnungseingriff. Das ruhige da nun nicht formschlüssig sondern nur kraftschlüssig umlaufende Abwälzen von als Wellgenerator (30) dienenden, mit den Planeten-Zahnrädern (33) drehstarr verbundenen Planeten-Rollen (36) längs der unverzahnten Innenmantelfläche des Flexbandes (28) wirkt zusätzlich zur kraftschlüssigen Drehverbindung zwischen verzahntem Planetenrad (33) und seinen beiderseits angeordneten größeren Planeten-rollen (36) als weitere Überlast-Rutschkupplung.

## Beschreibung

Die Erfindung betrifft ein Wellgetriebe gemäß dem Oberbegriff des Hauptanspruches.

Das gattungsgemäße Getriebe ist aus der DE 197 08 310 A1 als auch sogenanntes Ringband-Untersetzungsgetriebe mit einem Wellgenerator in Form eines unrunden Kernes oder in Form von exzentrisch zur Antriebswelle umlaufenden Kreisscheiben bekannt, die längs der Innenmantelfläche des Flexbandes, dort auch als radial elastische Abrollbuchse bezeichnet, abrollen. Jene Scheiben können verdrehbar an einer drehstarr mit der Antriebswelle rotierenden Platte gelagert sein. Wenn jedoch eine Eingangsuntersetzung vor dem eigentlichen Wellgetriebe gefordert wird, handelt es sich nach jener Vorveröffentlichung bei den Scheiben um Planeten-Zahnräder, die auf einem drehstarr mit der Antriebswelle gekoppelten Sonnenrad kämmend umlaufen. Das bedingt allerdings, daß die Verzahnuungsköpfe jener Zahnscheiben eine unerwünschte da desto höhere und verschleißträchtigere wie auch geräuschvollere Beanspruchung der Innenmantelfläche des Flexbandes hervorrufen.

Ähnliche Kombinationen aus Wellgetriebe mit vorgeschaltetem Planetenradgetriebe sind aus der DE 199 14 555 A1 und, damit fast baugleich, aus der DE 199 14 556 A1 bekannt. Dort kämmen allerdings die Planetenräder außer mit dem Sonnenrad auch mit einer umlaufenden Innenverzahnung am Getriebegehäuse, was wegen der dadurch gegebenen, umlaufenden radialen Einspannung der Planetenzahnräder unter kritischen Lastzuständen zu einer die Konstruktion gefährdenden lokalen Überlastung führen kann. Diese Gefahr ist nach der dortigen Konstruktion noch insofern desto größer, als bei jedem Planetenrad dessen kraftschlüssiger Ablaufvorgang innerhalb des Flexbandes drehstarr mit dem formschlüssigen Ablaufvorgang in der Gehäuseverzahnung gekoppelt ist, im Verlaufe dieser achsparallelen Kraftüberleitung also keinerlei Überlastsicherung vorgesehen ist.

Die Funktion jenes - auch als Harmonic Drive oder als Ringband-Getriebe bekannten - Wellgetriebes als sehr stark untersetzendem, selbsthemmendem System mit zur Antriebswelle koaxialer Abtriebswelle beruht darauf, daß wenigstens ein in einem Reifen um die Getriebeachse umlaufendes Planetenrad als sogenannter Well-Generator den auch als Flexband oder Ringband bezeichneten Reifen umlaufend radial nach außen verformt und dadurch dessen Außenmantelfläche umlaufend lokal gegen die hohlzylindrische Innenmantelfläche geringfügig größeren Umfanges eines gehäusefest stationären, als formstabiler Stützring dienenden Hohlrades andrückt. Infolgedessen wälzt sich das Flexband mit seiner Außenmantelfläche kraftschlüssig über Reibflächen oder (bei einem Flexband in Form eines Zahnriemens) formschlüssig über Verzahnungen im Stützring ab, wobei es sich nach Maßgabe der Umfangsdifferenz zwischen Stützring und Flexband langsamer als der motorisch angetriebene Wellgenerator um die Getriebeachse dreht. Diese gegenüber dem Antrieb stark verlangsamte Drehbewegung wird über die vorzugsweise verzahnte Außenmantelfläche des Flexbandes auf die dann ebenfalls verzahnte Innenmantelfläche eines weiteren Außenringes, des koaxial neben dem Stützring angeordneten aber im Gegensatz zu jenem nicht stationären sondern verdrehbaren Abtriebsringes übertragen, der z.B. topf- oder haubenförmig gestaltet und mit der im Getriebegehäuse gelagerten Abtriebswelle ausgestattet ist. In der Verzahnung vom Flexband zum Abtriebsring kann dabei noch eine weitere Untersetzung der Drehgeschwindigkeit infolge unterschiedlichen Umfanges (also unterschiedlicher Zähnezahl) erfolgen.

Der Antrieb eines solchen Well-Generators erfolgt üblicherweise über einen koaxial angeflanschten hochtourigen Kleinspannungs-Gleichstrommotor, dessen Motorwelle zugleich als Getriebe-Antriebswelle dienen kann. Deren schnelle Rotation wird vom Wellgetriebe in eine sehr viel langsamere Drehbewegung entsprechend größeren Drehmomentes untersetzt, was vielfältig Anwendung etwa als Stellelement für das Motor- und Klimamanagement und für andere insbesondere manuelle Eingriffe ersetzende Funktionen im Kraftfahrzeug findet. Allerdings läßt die konstruktiv bedingt sehr große Untersetzung keine beliebigen kleinen Abstufungen zu. Insbesondere für den mittleren Untersetzungsbereich wird deshalb zuweilen eingangsseitig eine konstruktiv in weiten Grenzen vorgebbare Eingangsuntersetzung etwa mittels eines Planetenradgetriebes vorgesehen.

Beim gattungsbildenden Wellgetriebe besteht der Wellgenerator dafür aus zwei einander bezüglich der Getriebeachse diametral gegenüberliegenden, stirnverzahnten Planetenrädem, die an einem Planetensteg, einem um die Getriebeachse verdrehbaren zweiarmigen Hebel gelagert sind und jedes im Verzahungseingriff zwischen einerseits einem eingangsseitig angetriebenen, zentralen Sonnenrad und andererseits dem gehäusefesten Stützring abrollen. Axial versetzt zu jedem dieser beiden Planeten-Zahnräder ist eine ihm gegenüber verdrehbare Rolle gelagert, die im Zuge der Drehbewegung der Planeten-Zahnräder als Wellgenerator wirkend das Flexband umlaufend lokal radial nach außen verformt. Das ist stellt eine recht aufwendige Konstruktion dar, die dort mit erhöhten Anforderungen an einen geräuscharmen Lauf des Getriebes gerechtfertigt wird.

Der vorliegenden Erfindung liegt die technische Problemstellung zugrunde, das gattungsbildende Wellgetriebe dahingehend zu vereinfachen, daß ohne spürbare Funktionsbeeinträchtigung eine weniger aufwendige aber sogar noch betriebssicherere Konstruktion erzielt wird.

Gemäß der Merkmalskombination des Hauptanspruches ist diese Aufgabe im wesentlichen dadurch gelöst, daß auf einen Verzahnungseingriff des Planetenzahnrades mit dem Gehäuse ganz verzichtet wird und die Wellgenerator-Rollen als Planeten-Rollen formschlüssig direkt vom eingangsseitigen Sonnenrad angetrieben werden, indem sie drehstarr mit den Planeten-Zahnrädern verbunden sind.

Dadurch entfallen die sonst hoch beanspruchten Verzahnungseingriffe von den Planetenrädem zum Getriebegehäuse, also der dafür erforderliche besondere Fertigungsaufwand ebenso wie die durch diese Verzahnungseingriffe sonst gegebenen Geräuschquellen. Statt dessen wälzen sich die vom Sonnenrad her formschlüssig angetriebenen Rollen mit ihren Abroll- oder Reibflächen im Flexband ab, das wie üblich andererseits mit seiner Außenmantelfläche sowohl mit dem gehäusefesten Stützring wie auch, axial unmittelbar benachbart, mit dem konzentrisch dazu verdrehbaren Abtriebsring lokal umlaufend in Eingriff steht. Dieser Abwälzvorgang in der unverzahnten Innenmantelfläche des Flexbandes hat zugleich die Funktion einer Rutschkupplung, die bei, hinsichtlich des zwischen Antriebswelle und Abtriebswelle anstehenden Drehmomentes, mechanischer Überlastung des Getriebes wirksam wird. Das bedeutet, daß das Flexband dann stehen bleibt und die Wellgenerator-Rollen in ihm durchrutschen, ohne daß es bei den Verzahnungseingriffen an der Außenmantelfläche des Flexbandes oder zwischen Sonnenrad und Planetenrädern zu einer kinetisch kritischen Überbeanspruchung kommen kann.

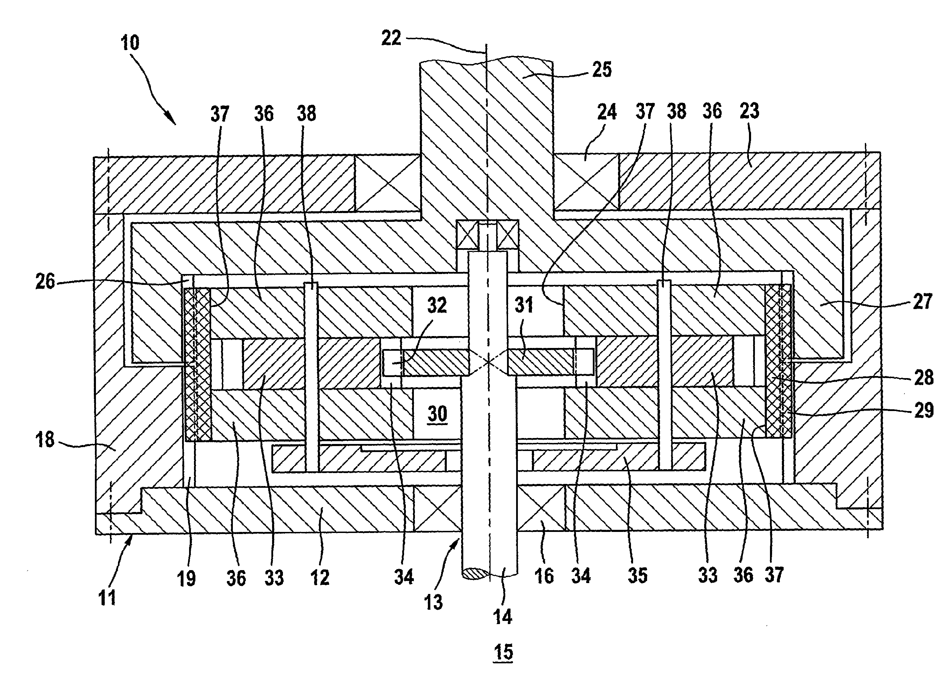

Hinsichtlich weiterer Vorteile sowie besonderer Ausbildungen und Weiterbildungen und deren Vorteilen wird außer auf die weiteren Ansprüche auch auf die nachstehende Beschreibung eines bevorzugten Realisierungsbeispieles zur erfindungsgemäßen Lösung Bezug genommen. Die einzige Figur der Zeichnung zeigt unter Beschränkung auf das konstruktiv Wesentliche nicht ganz maßstabsgerecht im Axial-Längsschnitt ein Wellgetriebe mit Planetenrad-Eingangsstufe als Wellgenerator, der zur Vermeidung von Geräuschentwicklung und Überlastungen reibschlüssig an das Flexband gekoppelt ist.

Das in der Zeichnung im Axial-Längsschnitt skizzierte, komplett aus Kunststoff-Spritzgußteilen fertigbare, erfindungsgemäß ausgestaltete Wellgetriebe 10 weist ein Gehäuse 11 mit einer etwa kreisscheibenförmigen Grundplatte 12 auf. Ein zentrales Durchgangs-Loch 13 dient dem Eingriff der Antriebswelle 14, bei der es sich unmittelbar um die Motorwelle eines Antriebsmotors 15 handeln kann. Der Durchmesser des Loches 13 ist dann größer als derjenige der Welle 14, so daß hier keine radiale Lagerfunktion auftritt, weil die vom Motorlager übernommen ist. Andernfalls, oder wenn es sich bei der Grundplatte 12 um das Lagerschild des Motors 15 handelt, ist das Loch 14 mit einem Lager 16 ausgestattet. Gegenüberliegend kann die Antriebswelle 14 wie skizziert in der dort gelagerten Abtriebswelle 25 gelagert sein, um Biegebeanspruchungen zu vermeiden.

Die Grundplatte 12 ist beim skizzierten Ausführungsbeispiel in ihrem Randbereich mit Profilierungen zur formschlüssigen Aufnahme eines gehäusefesten Stützringes 18 mit Innenverzahnung 19 auf seiner formstabil hohlzylindrischen Innenmantelfläche ausgestattet. Der so separat gefertigte und dann erst auf die Grundplatte 12 montierte Stützring 18 erbringt gegenüber einem mit der Grundplatte 12 integralen Stützring u.a. den besonderen Vorteil, dessen Innenverzahnung 19 präziser kreisrund herstellen und dadurch einen verlustarmen, also auch besonders geräuscharmen Getriebelauf erzielen zu können.

Der gegenüberliegende Deckel 23 stellt die freie Stirnseite des Gehäuses 11 und damit auch des Getriebes 10 dar und enthält dessen abtriebsseitige radiale Lagerung 24 für eine koaxial zur Antriebswelle 14 und damit zur Getriebeachse 22 hindurchragende Abtriebswelle 25. Diese ist drehstarr mit einem topf- oder haubenförmigen, mit formstabiler Innenverzahnung 26 versehenen Abtriebsring 27 verbunden, der zwischen dem zur Grundplatte 12 hin axial davor gelegenen gehäusefesten Stützring 18 und der innenseitigen Oberfläche des Deckels 23 im Gehäuse 11 axial geführt ist.

In die beiden koaxial gehalterten, axial einander benachbarten Ringe 18-27 ist ein biegeweicher breiter Zahnriemen, das radial verformbare Flexband 28 mit Außenverzahnung 29 eingelegt. Das Band 28 ist axial breiter als jeder einzelne der beiden einander benachbarten, formstabilen Ringe 18, 27 und kämmt demzufolge über das gerade radial ausgebeulte (vom skizzierten Schnitt erfaßte) Bogenstück mit deren beiden Innenverzahnungen 19, 26 gleichzeitig. Vorzugsweise ist das Flexband 28 (entgegen der verdeutlichenden Prinzipdarstellung in der Skizze) axial so breit wie die beiden Ringe 18-27 zusammen und dadurch zwischen der Grundplatte 12 und dem Haubenboden des Abtriebsringes 27 axial geführt. Für das Umlaufen des infolge Radialverformung kämmenden Bogenstückes des Flexbandes 28 in den Ringen 18-27 nimmt das Flexband 28 seinerseits in seinem Innern einen Wellgenerator 30 auf, der von außerhalb des Getriebes 10 motorisch in Drehbewegung versetzt wird.

Das Flexband 28 und sein zentral darin gelegener Wellgenerator 30 sind im Gehäuse 11 des Getriebes 10 über die Antriebswelle 14 gelagert. Denn die trägt ein Sonnenrad 31, über dessen Außenverzahnung 32 im dargestellten Beispielsfalle zwei Planetenzahnräder 33 mit ihren Stirnverzahnungen 34 abrollen, wofür sie auf einem gegenüber dem Sonnenrad 31 axial versetzten Planetensteg 35 gelagert sind, durch welche die Antriebswelle 14 mit Spiel hindurchtritt. Zwar besteht ein radialer Abstand zwischen den Stirnverzahnungen 34 der Planetenzahnräder 33 zur Innenmantelfläche des Flexbandes 28, aber die Planetenzahnräder 33 sind drehstarr mit Rollen 36 um so viel größeren Durchmessers bestückt, daß diese mit ihren glatten Abrollflächen 37 unter Friktion radial gegen die unverzahnte Innenmantelfläche des Flexbandes 28 anliegen, um dieses hier zu seinem Verzahnungseingriff lokal radial nach außen in die Innenmantelflächen der Stütz- und Abtriebsringe 18, 27 hinein zu drücken, ohne dafür ein im Querschnitt abgestuftes Flexband einsetzen zu müssen. Für einen unverkanteten Abwälzvorgang ist vorzugsweise jedem der beiden axial gegeneinander versetzten äußeren Ringe 18 und 27 eine eigene Planeten-Rolle 36 beiderseits des Planetenzahnrades 33 zugeordnet; wobei in der jeweiligen kraftschlüssigen axialen Kopplung zwischen Planetenrad und Planeten-Rolle eine weitere Rutschkupplungs-Funktion zur zuverlässigen Überlast-Sicherung besteht.

Die Drehzahl der Antriebswelle 14 erfährt also in der vorzugsweise verzahnten Drehverbindung vom antriebsfesten Sonnenrad 31 zu gezahnten Planetenrädern 33 eine konstruktiv fein abstufbare erste Untersetzung, die dann in der Verzahnung des Flexbandes 28 zu den Außenringen 18, 27 ihre für das eigentliche Wellgetriebe 10 typische, sehr große zusätzliche Untersetzung erfährt. Der Kraftfluß verläuft von der Antriebswelle 14 kommend drehstarr über deren Sonnenrad 31 radial auf die Planetenräder 33, von wo er jeweils achsparallel friktiv auf zwei Planeten-Rollen 36 verzweigt und vorzugsweise ebenfalls friktiv wieder radial in das dann nur außen verzahnte Flexband 28 eingeleitet wird. Zwischen dem Planetengetriebe 31-33 zur Eingangsuntersetzung und dem Getriebegehäuse 11 besteht somit kein Eingriff. Das deshalb verspannungsfrei und ruhig, zumal nun auch mit verringerter Eingangsgeschwindigkeit und vorzugsweise nicht formschlüssig sondern nur kraftschlüssig, umlaufende Abwälzen der als Wellgenerator 30 dienenden, mit den Planetenrädern 33 kraftschlüssig verbundenen Planeten-Rollen 36 in der Innenmantelfläche des Flexbandes 28 wirkt als eine mehrerer zuverlässiger Überlast-Rutschkupplungen im Kraftfluß, zusätzlich zur Überlastsicherung in Form der Friktion zwischen jedem Planetenrad 33 und seinen beiderseitigen Planetenrollen 36. Bei (entgegen dem skizzierten Ausführungsbeispiel) verzahntem Wellgenerator 30 kann dagegen eine weitere, zusätzlich zur Kopplung zwischen Planetenrad 33 und Planetenrolle 36 wirksame Rutschkupplungs-Funktion in eine unverzahnte, also nur kraftschlüssige Drehverbindung zwischen Sonnenrad und Planetenräder aufgenommen werden.

## Patentansprüche

1. Wellgetriebe (10) mit einem als Wellgenerator (30) dienenden Planetenradantrieb mit wenigstens einem auf einem antriebsseitigen Sonnenrad (31) formschlüssig umlaufenden Planetenrad (33), wobei der Wellgenerator (30) längs der Innenmantelfläche eines außen verzahnten, umlaufend radial verformbaren Flexbandes (28) abrollt, das sich axial durch die Innenverzahnungen eines gehäusefesten radial formstabilen Stützringes (18) und eines ebenfalls radial formstabilen, aber verdrehbar im Gehäuse (11) gelagerten Abtriebsringes (27) erstreckt, **dadurch gekennzeichnet, daß** das Planetenrad (33) - miteinander verdrehbar aber in dieser Kopplung als Überlast-Rutschkupplung ausgelegt - mit einer mit diesem umlaufenden Planeten-Rolle (36) dagegen größeren Durchmessers bestückt ist, die mit glatter Abrollfläche (37) radial gegen die unverzahnte Innenmantelfläche des Flexbandes (28) anliegend längs dieser Innenmantelfläche abrollt.

2. Wellgetriebe nach dem vorangehenden Anspruch, **dadurch gekennzeichnet, daß** beiderseits eines Planetenrades je eine Planeten-Rolle (36) angeordnet ist, von denen die eine dem Stützring (18) und die andere dem Abtriebsring (27) radial zugeordnet ist.

3. Wellgetriebe nach einem der vorangehenden Ansprüche, **dadurch gekennzeichnet, daß** Planetenrad und -Rolle (36) von einer gemeinsamen Welle (38) auf einem Planetensteg (35) gehaltert sind.

4. Wellgetriebe nach einem der vorangehenden Ansprüche, **dadurch gekennzeichnet, daß** ein separat gefertigter Stützring (18) mit Innenverzahnung (19) auf eine Grundplatte (12) des Gehäuses (11) montiert ist.

5. Wellgetriebe nach einem der vorangehenden Ansprüche, **dadurch gekennzeichnet, daß** in axial einander benachbarte Ringe (18, 27) mit Innenverzahnungen (19, 26) ein radial verformbares Flexband (28) mit Außenverzahnung (29) eingelegt ist, das axial breiter als jeder der beiden Ringe (18, 27) ist.

6. Wellgetriebe nach einem der vorangehenden Ansprüche, **dadurch gekennzeichnet, daß** die Träger- und Antriebs-Welle (14) des Sonnenrades (31) antriebsseitig im Lagerschild eines Antriebsmotors (15) gelagert ist, das als Grundplatte (12) für die gehäuseseitige Befestigung des Stützringes (18) dient.

7. Wellgetriebe nach einem der vorangehenden Ansprüche, **dadurch gekennzeichnet, daß** die Trägerund Antriebs-Welle (14) des Sonnenrades (31) abtriebsseitig in der Abtriebswelle (25) gelagert ist, die mittels ihres Abtriebsringes (27) zwischen dem Stützring (18) und einem abtriebsseitigen Gehäuse-Deckel (23) axial geführt ist.
